# EUROPÄISCHE PATENTSCHRIFT

(11) **EP 1 123 574 B1**
(45) Veröffentlichungstag und Bekanntmachung des Hinweises auf die Patenterteilung: **16.10.2002**
(21) Anmeldenummer: 99940151.6
(22) Anmeldetag: 05.08.1999
(51) Int. Cl.: H02G 15/007, H02G 15/04

(54) **KABELHALTERUNG**
CABLE CLAMP
ATTACHE DE CABLE

(30) Priorität: 26.10.1998 DE 19849227
(43) Veröffentlichungstag der Anmeldung: 16.08.2001
(73) Patentinhaber: Hirschmann Electronics GmbH & Co. KG, 72654 Neckartenzlingen (DE)
(72) Erfinder: KUHN, Peter, D-73275 Köngen (DE); HAGMANN, Bernd, D-73312 Geislingen/Steige (DE)
(74) Vertreter: Stadler, Heinz, Dipl.-Ing.
(86) Internationale Anmeldenummer: EP9905663
(87) Internationale Veröffentlichungsnummer: WO00025405

(56) Entgegenhaltungen:
- EP-A- 0 583 707

## Beschreibung

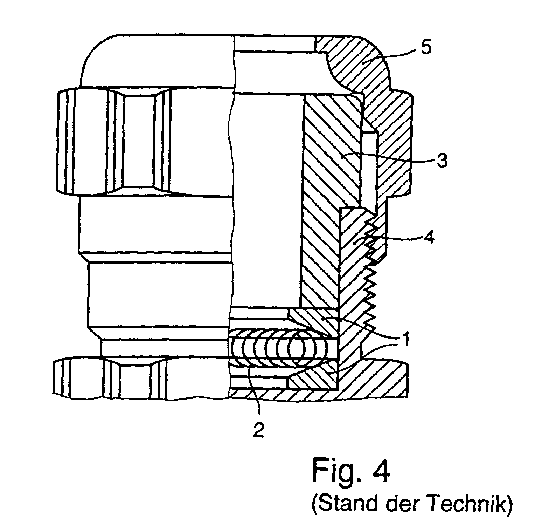

Die Erfindung betrifft eine Kabelhalterung, wie sie im Oberbegriff des Anspruches 1 beschrieben ist. Eine derartige Einrichtung ist von Kabelverschraubungen, z.B. sogenannten PG-Verschraubungen wie etwa dem System "UNI-Dicht" der Firma Pflitsch bereits bekannt und in Figur 4 dargestellt.
Hierbei sind die beiden Druckscheiben 1, der Klemmfederring 2 und der Dichtring 3 getrennte Einzelteile, die bei der Montage der Kabelhalterung in aufwendiger und komplizierter Weise in das Kabeldurchführungsteil 4 mit Hülse 5 einzubringen sind. Außerdem ist die Lagerhaltung und vor allem das Vorhalten dieser separaten Teile insbesondere bei Kabelanschlüssen vor Ort aufwendig und nicht immer sicher gewährleistet.

Der Erfindung liegt daher die Aufgabe zugrunde, eine Kabelhalterung der eingangs genannten Art auf möglichst einfache und kostengünstige Weise derart weiterzubilden, daß eine einfache und schnelle Montage sowie eine kostengünstige Lagerhaltung ermöglicht und die Wahrscheinlichkeit, daß Teile der Kabelhalterung am Montageort fehlen, minimiert ist.

Die Aufgabe ist durch die kennzeichnenden Merkmale des Anspruches 1 gelöst.
Durch das bereits beim Hersteller als Einheit vormontierte, aus den beiden Druckringen sowie dem Klemmfederring bestehende Druckstück ist sowohl die Bevorratung als auch die Montage vereinfacht und der Kabelanschluß sehr schnell durchführbar.
Dazu ist lediglich nacheinander das Druckstück in das in der Regel als Rohrstutzen eines Gehäuses ausgebildete Kabeldurchführungsteil einzulegen, das Kabel durch die Hülse und das entspannte Druckstück zu führen und schließlich die Hülse am Kabeldurchführungsteil zu befestigen.
Bei dem zuletzt genannten Montageschritt werden zugleich die beiden Druckringe im Rahmen des möglichen axialen Hubs gegeneinander gedrückt, wodurch der Klemmfederring an den schrägen inneren Stirnflächen der Druckringe entlang am gesamten Umfang zur Achse hin und damit so stark gegen das Kabel gepreßt wird, daß dieses im gewünschten Maße fixiert ist.

In den Unteransprüchen sind vorteilhafte Ausführungen bzw. Ausgestaltungen der erfindungsgemäßen Kabelhalterung angegeben.

So ist durch eine Ausbildung der Druckringe gemäß Anspruch 2 ohne Mehrkosten erreicht, daß der Klemmfederring nicht seitlich ausweichen kann, sondern zentrisch zwischen den beiden Druckringen gehalten wird und dadurch auch gleichmäßig am Kabelumfang anliegt und mit auf der gesamten Berührungsfläche gleichem Druck dagegengepreßt wird. Dies ist nicht nur dann von Vorteil, wenn der Klemmfederring in einen Kunststoffmantel eines Kabels eingedrückt und dabei eine Beschädigung des Mantels verhindert wird, sondern auch dann, wenn er zur elektrischen Kontaktierung unter Druck am Schirm eines abgemantelten geschirmten Kabels anliegt, weil dann eine maximale Kontaktfläche gewährleistet ist.

In Anspruch 3 ist ein einfach und kostengünstig herstellbares Druckstück beschrieben, bei dem die beiden beispielsweise im Spritzgußverfahren ohne Mehrkosten mit einer Nut bzw. einer Reihe von Rastarmen versehenen Druckringe nach dem Einlegen des Klemmfederrings nur noch zusammengesteckt werden müssen.
Dabei ist die Breite der Nut so bemessen, daß sich nach Abzug der Stärke der Rastarme die gewünschte Größe des zum Zusammendrücken des Klemmfederrings erforderlichen axialen Hubs ergibt.

Der genannte Steckvorgang ist durch eine Ausbildung der Rastnasen gemäß Anspruch 4 wesentlich erleichtert. Der zweite Druckring braucht dann nur noch mit minimalem Kraftaufwand mit seinen Rastnasen in die Nut des anderen Druckrings eingeklipst zu werden. Dieser Montagevorgang ist bei Bedarf ohne Werkzeug von Hand ausführbar, bei maschineller Fertigung sind hierfür sehr einfache Werkzeuge einsetzbar.

Eine vorteilhafte Ausführung der Nutwand, die von den Rastnasen hintergriffen wird, ist in Anspruch 5 aufgeführt. Damit ist ein besonders geringer Durchmesser des Druckstücks ermöglicht. Darüber hinaus weist dieses auf seiner gesamten Länge einen konstanten Durchmesser und damit eine optimale Führung im Kabeldurchführungsteil auf.

Für den in der Praxis häufigen Fall einer Kabelverschraubung für geschirmte Kabel ist der Kabelschirm galvanisch mit Massepotential, beispielsweise ein Metallgehäuse, zu verbinden. Dies ist bei der erfindungsgemäßen Kabelhalterung auf vorteilhaft einfache Weise dadurch realisiert, daß nach Anspruch 6 wenigstens einer der beiden Druckringe aus elektrisch leitendem Material besteht. Ist der gehäuseseitige innere Druckring aus Metall, so erfolgt die galvanische Verbindung des Kabelschirms über den Klemmfederring und diesen inneren Druckring, der seinerseits am Anschlagbund des metallischen Kabeldurchführungsteils liegt. Die alternative Möglichkeit; zur leitenden Verbindung des Kabelschirms mit dem Gehäuse den äußeren Druckring metallisch auszuführen, setzt voraus, daß die Hülse ebenfalls aus Metall besteht und mit dem äußeren Druckring in leitender Verbindung steht.

In den meisten Anwendungsfällen hat die Kabelhalterung in einem Kabeldurchführungsteil zugleich die Dichtheit der Kabeldurchführung zu gewährleisten. Dies ist in bekannter Weise durch die Anordnung eines Dichtrings zwischen äußerem Druckring und Hülse erreicht, der beim Befestigen der Hülse am Kabeldurchführungsteil derart zusammengequetscht wird, daß er unter Druck zugleich am Kabel und an der Innenfläche der Hülse anliegt.
Dieser bekannte Dichtring ist ein separates Teil, welches zusätzlich eingekauft und am Lager gehalten werden muß, am Montageort trotzdem häufig nicht parat ist und einen weiteren Montageschritt erfordert.
Demgegenüber ist bei einer Ausführung gemäß Anspruch 7 eine besonders günstige Lagerhaltung und einfachste Montage des Druckstücks dadurch erreicht, daß der Dichtring mit dem ihm zugewandten Druckring mechanisch verbunden ist.
Bei dieser kompakten einteiligen Ausführung des Druckstücks kann die Verbindung, etwa durch Verschrauben oder Verrasten, lösbar sein. Die Verbindung kann aber auch unlösbar und dadurch unverlierbar ausgeführt werden, beispielsweise nach Anspruch 8 durch Verkleben des Dichtrings mit dem äußeren Druckring oder gemäß Anspruch 9 durch Anspritzen an diesen. Diese zweite Alternative weist den Vorteil einer besseren Haftung des Dichtrings am Druckstück sowie einer kostengünstigeren Fertigung auf, weil Druckring und angespritzter Dichtring mittels einer Doppel-Spritzform in einem einzigen Arbeitsgang herstellbar sind.

Sofern die Elastizität des Materials dieses dem Kabeleinführungsbereich der Hülse zugewandten Druckrings ausreichend groß für Dichtzwecke, aber noch gering genug ist, um den erforderlichen Druck des Klemmfederrings beim Befestigen der Hülse am Kabeldurchführungsteil aufnehmen zu können, ist es besonders vorteilhaft, den Druckring zugleich als Dichtring zu verwenden (Anspruch 10). Damit ist kein besonderer Dichtring - ob als separates oder mit dem äußeren Druckring verbundenes Teil - mehr erforderlich, so daß die Kabelhalterung besonders einfach und kostensparend herstell- und einsetzbar ist.

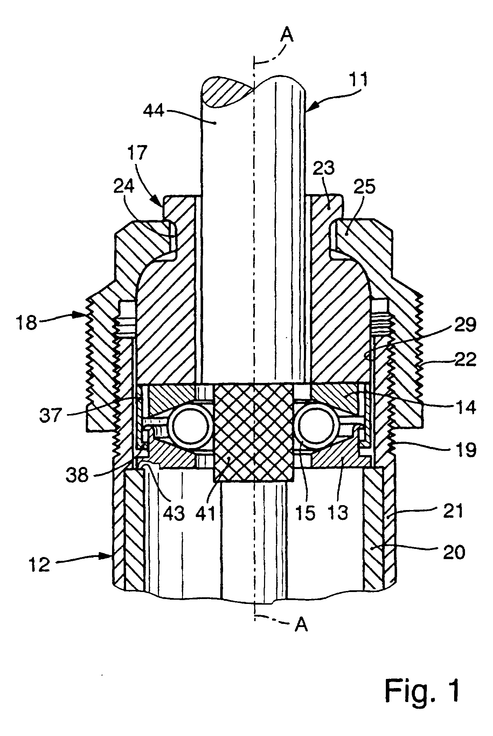

Die größtmögliche Kompaktheit der erfindungsgemäßen Kabelhalterung ist durch eine in Anspruch 11 beschriebene Ausführung (Figur 1) erreicht, bei der dem Anwender durch einfaches Aufklipsen der Hülse auf den Dichtring ein einziges vormontiertes Teil zur Verfügung gestellt wird, welches nicht nur mit minimalem Aufwand herstellbar ist, sondern eine äußerst unkomplizierte Handhabung beim praktischen Einsatz ermöglicht. Denn dazu ist nur noch das (ggf. abgemantelte) Kabel durch Dichtring und Druckstück bis zur Sollposition einzuführen und anschließend die Hülse am Kontaktdurchführungsteil zu befestigen. Dabei wird zugleich das Kabel festgeklemmt und der Kabeldurchführungsbereich durch Zusammenpressen des Dichtrings flüssigkeitsdicht verschlossen.

Eine besonders zweckmäßige Befestigung der Hülse am Kontaktdurchführungsteil, z.B. eines Rohrstutzens eines Gehäuses (Anspruch 13), besteht nach Anspruch 12 darin, eine Schraubhülse vorzusehen, die auf das als Gewindestutzen ausgebildete Kabeldurchführungsteil aufschraubbar ist. Durch die Stärke des Anziehens der Schraubhülse in Verbindung mit der Materialwahl des Dichtrings sowie den axialen Abmessungen der zusammenwirkenden Teile der Kabelhalterung ist dabei auf einfachste Weise nicht nur der gewünschte Klemmdruck des Klemmfederrings und damit die erforderliche Zugentlastung des Kabels, sondern auch die geforderte Dichtwirkung entsprechend den Erfordernissen des Einzelfalls erzielt.

In Anspruch 14 ist eine einfache und kostengünstige Möglichkeit angegeben, das metallische Gehäuse samt Rohrstutzen elektrisch zu isolieren und zugleich mechanisch zu schützen.

Die Erfindung wird nachstehend noch anhand eines Ausführungsbeispiels in den Figuren erläutert. Es zeigen:
- Fig. 1 -: einen Axialschnitt durch die montierte aber noch nicht vollständig am Kabeleinführungsstutzen befestigte Kabelhalterung,

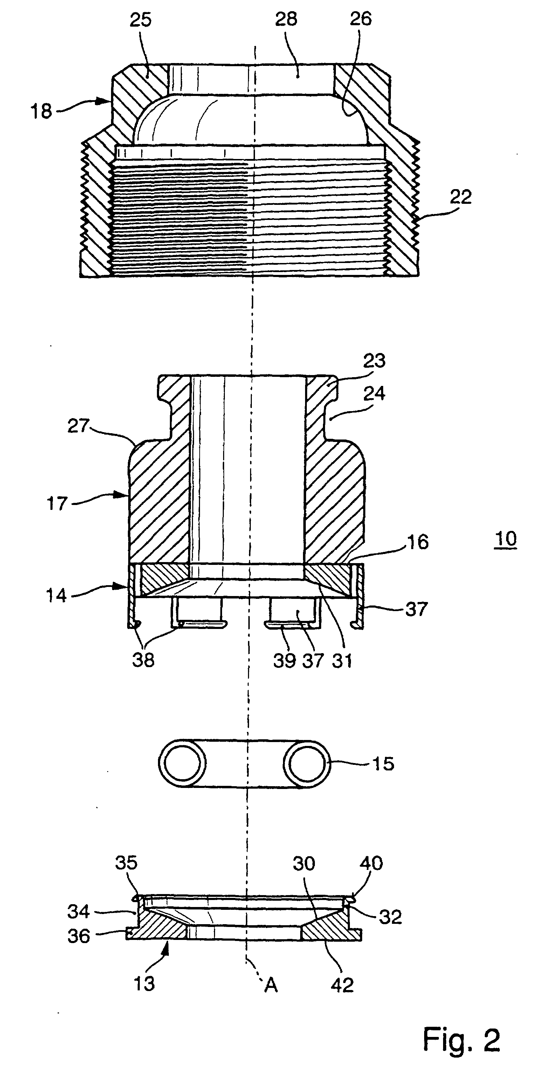

- Fig. 2 -: einen Axialschnitt durch die Einzelteile der Kabelhalterung,

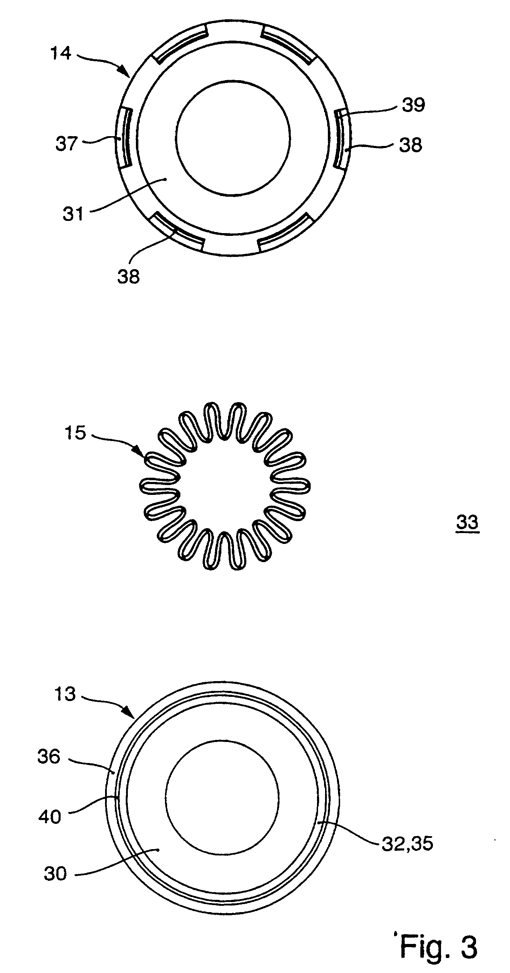

- Fig. 3 -: eine Draufsicht auf die einander zugewandten Stirnflächen der beiden Druckringe sowie den Klemmfederring und
- Fig. 4 -: eine hälftig aufgebrochene Ansicht einer aus dem Stand der Technik bekannten Kabelverschraubung.

Die Kabelhalterung 10 zur Klemmhalterung eines geschirmten Kabels 11 in einem rohrförmigen Kabeleinführungsstutzen 12 eines mit diesem einstückigen, nicht dargestellten Metallgehäuses zur Aufnahme einer elektrischen Schaltungseinrichtung besteht aus einem gehäuseseitigen inneren metallischen Druckring 13, einem kabelseitigen äußeren Druckring 14 aus Kunststoff, einem zwischen diesen angeordneten, aus einer metallischen Spiralfeder gebogenen Klemmfederring 15, einem an der kabelseitigen Stirnfläche 16 des äußeren Druckrings 14 angespritzten Dichtring 17 sowie einer diesen umfassenden Schraubhülse 18, welche auf ein angepaßtes Außengewinde 19 des Kabeleinführungsstutzens 12 aufschraubbar ist.
Letzterer besteht aus einem metallischen inneren Rohrstutzen 20, der mit dem Metallgehäuse einstückig ist, und einer durch Umspritzen hergestellten rohrförmigen Kunststoffhülle 21, die an ihrem freien Ende das Außengewinde 19 trägt. Die Schraubhülse 18 trägt ein Grif&ändel 22, wodurch auch beim Aufschrauben von Hand das erforderliche Drehmoment aufgebracht werden kann.

Der Dichtring 17 weist einen Kragen 23 mit einer Umfangsausnehmung 24 auf, in die ein Abschlußbund 25 der Schraubhülse 18 derart eingreift, daß diese einerseits gegenüber dem Dichtring 17 drehbar ist und zum anderen beim Aufschrauben auf das Außengewinde 19 den Dichtring 17 zusammendrückt. Dabei liegen Schraubhülse 18 und Dichtring 17 durch entsprechende Formgebung ihrer einander zugewandten Flächen so großflächig aneinander an, daß ein hoher Druck sowohl in axialer als auch in radialer Richtung übertragen wird. Die Konturen 26, 27 der gegeneinander gedrückten Flächen von Schraubhülse 18 und Dichtring 17 sind hierzu konkav bzw. korrespondierend konvex gewölbt, wodurch einerseits die genannte Kraftübertragung wie bei zusammenwirkenden konischen Flächen erzeugt und andererseits ein Durchgleiten des Dichtrings 17 durch die Einlaßöffnung 28 der Schraubhülse 18 vermieden ist.

Durch den Druck in radialer Richtung wird der Dichtring 17 zugleich gegen die Innenfläche 26 der Schraubhülse 18 und großflächig gegen die Kabeloberfläche gepreßt, so daß der Kabeleinführungsbereich des Kabeleinführungsstutzens 12 sicher abgedichtet ist. Darüber hinaus wird der Dichtring 17 auch gegen die Innenwand 29 des freien Endteils der Kunststoffhülle 21 gedrückt, wodurch die Kabelhalterung 10 auch gegen das Eindringen von Flüssigkeit über die Gewindeverschraubung gesichert ist.

Die einander zugewandten Stirnflächen 30, 31 der beiden Druckringe 13,14 sind zur Achse A der Kabelhalterung 10 hin konisch verjüngt. Die Stirnfläche 30 des inneren Druckrings 13 weist am äußeren Rand einen axial abragenden Stirnflansch 32 auf, der ein seitliches Ausweichen des im entspannten Zustand an seiner Innenfläche anliegenden Klemmfederrings 15 verhindert und somit die Montage des aus den Druckringen 13,14 und dem Klemmfederring 15 bestehenden Druckstücks 33 auf einfache Weise wesentlich erleichtert.

Der innere Druckring 13 weist eine Umfangsnut 34 mit einer ersten, dem Klemmfederring 15 zugewandten Nutwand 35 und einer zweiten Nutwand 36 auf.

Der äußere Druckring 14 trägt sechs damit einstückige, gleichmäßig am Umfang verteilte Rastarme 37, die mit an den freien Enden angeordneten zur Achse A hin abragenden Rastnasen 38 versehen sind, welche jeweils eine Einführungschräge 39 besitzen. Die erste Nutwand 35 ist mit einer Auflaufschräge 40 ausgestattet, welche mit der Einführungsschräge 39 korrespondiert.

Bei montiertem Druckstück 33 hintergreifen die Rastnasen 38 die erste Nutwand 35 und sind durch eine entsprechend gewählte Breite der Umfangsnut 34 in dieser axial um einen Hub beweglich, der ausreicht, um bei aufgeschraubter Schraubhülse 18 den Klemmfederring 15 so stark zusammenzudrücken, daß die geforderte Klemmkraft zur Zugentlastung des Kabels 11 erreicht ist.
Die Höhe der ersten Nutwand 35 ist um die Materialstärke der Rastarme 37 geringer als die der zweiten Nutwand 36, so daß das Druckstück 33 auf seiner ganzen Länge einen konstanten Außendurchmesser aufweist und dadurch ungehindert in den Kabeleinführungsstutzen einführbar ist.

Bei der Herstellung der Kabelhalterung 10 wird zunächst das Druckstück 33 gefertigt. Dazu ist lediglich der Klemmfederring 15 in den inneren Druckring 13 einzulegen und der äußere Druckring 14, an dessen äußeren Stirnfläche 16 bereits der Dichtring 17 aufgespritzt worden ist, auf den inneren Druckring 13 aufzuklipsen, was durch die korrespondierenden schrägen Flächen 39,40 mit geringem Kraftaufwand, also auch von Hand durchführbar ist. Danach ist nur noch die Schraubhülse 18 über den Dichtring 17 zu führen und mit ihrem Abschlußbund 25 in die Umfangsausnehmung 24 des Dichtrings 17 einzuknöpfen.
In diesem Zustand ist der Klemmfederring 15 entspannt und liegt außen an dem Stimflansch 32 des inneren Druckrings 13 an. Die Rastnasen 38 liegen an der ersten Nutwand an und der Innendurchmesser des Druckfederrings 15 ist geringfügig größer als der Außendurchmesser des zu klemmenden Kabelschirms 41.

Beim Anwender ist diese vormontierte Kabelhalterung 10 einfach zu bevorraten und am Einsatzort einzubauen, wobei die Unsicherheit eines fehlenden Einzelteils entfällt.

Zum Einbau ist die Kabelhalterung 10 lediglich in den Kabeleinführungsstutzen 12 bis zu einem Anschlag der gehäuseseitigen äußeren Stirnfläche 42 des inneren Druckrings 13 an der Stirnkante 43 des inneren Rohrstutzens 20 einzuschieben, sodann das entsprechend abgemantelte Kabel 11 durch den Dichtring 17 und den Klemmfederring 15 so weit einzuführen, daß der Kabelschirm 41 auf Höhe des Klemmfederrings 15 positioniert ist und dann die Schraubhülse 18 auf dem Außengewinde 19 der Kunststoffhülle 21 des Kabeleinführungsstutzens 12 festzuschrauben.
Bei diesem abschließenden Montageschritt wird der Dichtring 17 unter Druck großflächig gegen den Kabelmantel 44, die Innenfläche 26 der Schraubhülse 18 sowie die Innenfläche der Kunststoffhülle 20 gepreßt und zugleich der äußere Druckring 14 gegen den inneren Druckring 13 gedrückt, wobei der Klemmfederring 15 an deren konischen Flächen 30, 31 radial zentrisch zur Achse A hin gleitet und dabei so weit in den Kabelschirm 41 eingedrückt wird, bis die Rastarme 37 an der zweiten Nutwand 36 der Umfangsnut 34 des inneren Druckrings 13 anliegt. Dieser Hub ist so bemessen, daß eine ausreichend hohe Klemmkraft erreicht und damit die geforderte Zugentlastung des Kabels 11 gewährleistet ist und daß andererseits keine unzulässige Verformung des Kabelschirms 41 erfolgt.

Die beschriebene Kabelhalterung 10 ist also äußerst einfach und kostengünstig in Herstellung und Handhabung, gewährleistet dabei eine wirksame Zugentlastung des Kabels 11, eine hohe Flüssigkeitsdichtheit und eine dauerhaft sichere Kontaktierung zwischen dem Kabelschirm 41 und dem Metallgehäuse, die über den Klemmfederring 15, den metallischen inneren Druckring 13 sowie den leitenden inneren Rohrstutzen 20 erfolgt.

### Bezugszeichenliste

- 10 -: Kabelhalterung
- 11 -: Kabel
- 12 -: Kabeleinführungsstutzen
- 13 -: Innerer (erster) Druckring
- 14 -: Äußerer (zweiter) Druckring
- 15 -: Klemmfederring
- 16 -: Kabelseitige Stirnfläche des inneren Druckrings 13
- 17 -: Dichtring
- 18 -: Schraubhülse
- 19 -: Außengewinde der Kunststoffhülle 21
- 20 -: Innerer Rohrstutzen des Kabeleinführungsstutzens 12
- 21 -: Kunststoffhülle auf dem inneren Rohrstutzen 20
- 22 -: Griffrändel
- 23 -: Kragen des Dichtrings 17
- 24 -: Umfangsaussnehmung des Dichtrings 17
- 25 -: Abschlußbund der Schraubhülse 18
- 26 -: Innenkontur der Schraubhülse 18
- 27 -: Außenkontur des Dichtrings 17
- 28 -: Einlaßöffnung der Schraubhülse 18
- 29 -: Innenwand der Kunststoffhülle 21
- 30 -: Innere Stirnfläche des inneren Druckrings 13
- 31 -: Innere Stirnfläche des äußeren Druckrings 14
- 32 -: Stirnflansch der inneren Stirnfläche 30
- 33 -: Druckstück bestehend aus 13,14 und 15
- 34 -: Umfangsnut des inneren Druckrings 13
- 35 -: Erste Nutwand der Umfangsnut 34
- 36 -: Zweite Nutwand der Umfangsnut 34
- 37 -: Rastarme des äußeren Druckrings 14
- 38 -: Rastnasen der Rastarme 37
- 39 -: Einrührungschräge der Rastnasen 38
- 40 -: Auflaufschräge der ersten Nutwand 35
- 41 -: Kabelschirm
- 42 -: Gehäuseseitige Stirnfläche des inneren Druckrings 13
- 43 -: Stirnkante des inneren Rohrstutzens 20
- 44-: Kabelmantel

## Patentansprüche

1. Kabelhalterung (10) zur Klemmbefestigung eines Kabels (11) in einem rohrförmigen, einen Anschlagbund (42) an der Innenwand aufweisenden Kabeldurchführungsteil (12), mit einem zwischen den einander zugewandten, zur Achse (A) hin auseinanderstrebenden inneren Stimflächen (30, 31) zweier Druckringe (13, 14) angeordneten, das Kabel (11) umfassenden Klemmfederring (15) sowie einer die Druckringe (13, 14) und den Klemmfederring (15) umgebenden Hülse (18) die am Kabeldurchführungsteil (12) derart befestigbar ist, daß die äußere Stirnfläche (42) des einen Druckrings (13) gegen den Anschlagbund (42) und die einander zugewandten inneren Stirnflächen (30, 31) der Druckringe (13, 14) gegen den Klemmfederring (15) gepreßt sind und diesen radial gegen das Kabel (12) drücken,
**dadurch gekennzeichnet, daß** die Druckringe (13, 14) in Achsrichtung gegeneinander um einen Hub beweglich miteinander verbunden sind und der mögliche axiale Hub so bemessen ist, daß der Innendurchmesser der Klemmfederrings (15) im entspannten Zustand etwa gleich oder etwas größer und bei befestigter Hülse (18) kleiner ist als der Außendurchmesser des zu klemmenden Teils des Kabels (11).

2. Kabelhalterung nach Anspruch 1, **dadurch gekennzeichnet, daß** die innere Stirnfläche (30) wenigstens eines der Druckringe (13) einen von ihrem äußeren Randbereich in Achsrichtung abragenden Ringflansch (32) aufweist, dessen Innendurchmesser dem Außendurchmesser des Klemmfederrings (15) im entspannten Zustand entspricht.

3. Kabelhalterung nach Anspruch 1 oder 2, **dadurch gekennzeichnet, daß** der eine Druckring (13) eine Umfangsnut (34) und der zweite Druckring (14) an der dem ersten Druckring (13) zugewandten Seite am Umfang verteilte, wenigstens etwas elastische Rastarme (37) aufweist, die mit radial nach innen abragenden Rastnasen (38) die ihnen zugekehrte erste Wand (35) der Umfangsnut (34) des zweiten Druckrings (14) hintergreifen.

4. Kabelhalterung nach Anspruch 3, **dadurch gekennzeichnet, daß** die Rastnasen (38) zur Achse (A) der Kabelhalterung (10) hin konisch verjüngt ausgebildet sind.

5. Kabelhalterung nach Anspruch 3 oder 4, **dadurch gekennzeichnet, daß** die Höhe der ersten Wand (35) der Umfangsnut (34) um die Stärke der Rastarme (37) geringer ist als diejenige der zweiten Wand (36) der Umfangsnut (34).

6. Kabelhalterung nach einem der Ansprüche 1 bis 5, **dadurch gekennzeichnet, daß** wenigstens einer der beiden Druckringe (13) aus leitfähigem Material besteht.

7. Kabelhalterung nach einem der Ansprüche 1 bis 6 mit einem zwischen der Hülse (18) und der kabelseitigen Stirnfläche (16) des äußeren Druckrings (14) angeordneten Dichtring (17), **dadurch gekennzeichnet, daß** der Dichtring (17) mit dem ihm zugewandten Druckring (14) verbunden ist.

8. Kabelhalterung nach Anspruch 7, **dadurch gekennzeichnet, daß** der Dichtring (17) auf der äußeren Stirnfläche (16) des ihm zugewandten Druckrings (14) aufgeklebt ist.

9. Kabelhalterung nach Anspruch 7, **dadurch gekennzeichnet, daß** der Dichtring (17) an der äußeren Stirnfläche (16) des ihm zugewandten Druckrings (14) angespritzt ist.

10. Kabelhalterung nach Anspruch 7, **dadurch gekennzeichnet, daß** der Dichtring (17) mit dem ihm zugewandten Druckring (14) einstückig ist.

11. Kabelhalterung nach einem der Ansprüche 7 bis 9, **dadurch gekennzeichnet, daß** der Dichtring (17) im kabeleinführungsseitigen Endbereich eine am Umfang angebrachte Ausnehmung (24) aufweist, in die ein kragenförmiger Endbereich (25) der Hülse (18) eingreift.

12. Kabelhalterung nach einem der Ansprüche 1 bis 10, **dadurch gekennzeichnet, daß** die Hülse (18) eine Schraubhülse ist, die mit einem Innengewinde auf ein angepaßtes Außengewinde (19) des rohrförmigen Kabeldurchführungsteils (12) aufschraubbar ist.

13. Kabelhalterung nach einem der Ansprüche 1 bis 11, **dadurch gekennzeichnet, daß** das Kabeldurchführungsteil (12) als rohrförmiger Stutzen (20) eines Gehäuses ausgebildet ist, in dem das Kabel (11) an elektrische Schaltungsteile anschließbar ist.

14. Kabelhalterung nach Anspruch 12, **dadurch gekennzeichnet, daß** der Stutzen (20) samt Gehäuse eine Kunststoffumspritzung (21) aufweist.

## Claims

1. Cable clamp (10) for clamping a cable (11) in a tubular cable bushing part (12) comprising a stop collar (42) on the inner wall, having a clamping spring washer (15) surrounding the cable (11) and disposed between the mutually facing inner end surfaces (30, 31) - which splay apart towards the axis (A) - of two pressure rings (13, 14), and having a sleeve (18) which surrounds the pressure rings (13, 14) and the clamping spring washer (15) and which can be fastened to the cable bushing part (12) in such a way that the outer end surface (42) of one pressure ring (13) is pressed against the stop collar (42) and the mutually facing inner end surfaces (30, 31) of the pressure rings (13, 14) are pressed against the clamping spring washer (15) and press this clamping spring washer radially against the cable (12), **characterised in that** the pressure rings (13, 14) are connected to each other so as to move by a distance axially in opposite directions and the possible axial distance is such that the inner diameter of the clamping spring washer (15) in the relaxed condition is approximately equal to or somewhat larger than the outer diameter of the part of the cable (11) to be clamped and - when the sleeve (18) is fastened - is smaller than this outer diameter.

2. Cable clamp according to claim 1, **characterised in that** the inner end surface (30) of at least one of the pressure rings (13) has an annular flange (32) protruding from its outer edge region in the axial direction, the inner diameter of which flange corresponds to the outer diameter of the clamping spring washer (15) in the relaxed condition.

3. Cable clamp according to claim 1 or 2, **characterised in that** one pressure ring (13) has a peripheral groove (34) and the second pressure ring (14) has latching arms (37) which are at least somewhat elastic and are distributed around the periphery on the side facing the first pressure ring (13), which latching arms, by means of radially inwardly protruding latching lugs (38), engage behind the first wall (35) - which faces them - of the peripheral groove (34) of the second pressure ring (14).

4. Cable clamp according to claim 3, **characterised in that** the latching lugs (38) are formed tapering conically towards the axis (A) of the cable clamp (10).

5. Cable clamp according to claim 3 or 4, **characterised in that** the height of the first wall (35) of the peripheral groove (34) is smaller than that of the second wall (36) of the peripheral groove (34) by the amount of the thickness of the latching arms (37).

6. Cable clamp according to one of claims 1 to 5, **characterised in that** at least one of the two pressure rings (13) consists of conductive material.

7. Cable clamp according to any one of claims 1 to 6 having a sealing ring (17) disposed between the sleeve (18) and the cable-side end surface (16) of the outer pressure ring (14), **characterised in that** the sealing ring (17) is connected to the pressure ring (14) which faces it.

8. Cable clamp according to claim 7, **characterised in that** the sealing ring (17) is stuck to the outer end surface (16) of the pressure ring (14) which faces it.

9. Cable clamp according to claim 7, **characterised in that** the sealing ring (17) is sprayed onto the outer surface (16) of the pressure ring (14) which faces it.

10. Cable clamp according to claim 7, **characterised in that** the sealing ring (17) forms one piece with the pressure ring (14) which faces it.

11. Cable clamp according to any one of claims 7 to 9, **characterised in that** in the cable insertion-side end region the sealing ring (17) has a recess (24) provided on the periphery, into which recess a collar-like end region (25) of the sleeve (18) engages.

12. Cable clamp according to any one of claims 1 to 10, **characterised in that** the sleeve (18) is a threaded sleeve which can be screwed with an inner thread onto a suitable outer thread (19) of the tubular cable bushing part (12).

13. Cable clamp according to any one of claims 1 to 11, **characterised in that** the cable bushing part (12) is formed as a tubular connection piece (20) of a housing, in which the cable (11) can be connected to electrical circuit parts.

14. Cable clamp according to claim 12, **characterised in that** the connection piece (20) together with the housing has sprayed-on synthetic material (21).

## Revendications

1. Attache de câble (10) pour la fixation par serrage d'un câble (11) dans une partie de passe-câble (12) de forme tubulaire et présentant une collerette de butée (42) sur la paroi interne, avec une bague à ressort de serrage (15) disposée entre les faces frontales (30, 31) intérieures, tournées l'une vers l'autre et s'écartant en direction de l'axe (A), de deux bagues de pression (13, 14), comprenant le câble (11), et un fourreau (18) entourant les bagues de pression (13, 14) et la bague à ressort de serrage (15), qui peut être fixée sur la partie de passe-câble (12) de telle façon que la face frontale (42) extérieure d'une bague de pression (13) et les faces frontales (30, 31) intérieures, tournées l'une vers l'autre, des bagues de pression (13, 14) sont pressées respectivement contre la collerette de butée (42) et contre la bague à ressort de serrage (15) et appuient cette bague dans le sens radial contre le câble (12),
**caractérisée en ce que** les bagues de pression (13, 14) sont reliées entre elles de façon à pouvoir se déplacer avec une course dans le sens de l'axe l'une par rapport à l'autre et la course axiale possible est dimensionnée de telle façon que le diamètre intérieur de la bague à ressort de serrage (15) est à peu près identique ou légèrement supérieur dans l'état détendu, et lorsque le fourreau (18) est fixé, est inférieur au diamètre extérieur de la partie à serrer du câble (11).

2. Attache de câble selon la revendication 1, **caractérisée en ce que** la face frontale (30) intérieure d'au moins l'une des bagues de pression (13) présente une bride de bague (32) dépassant de sa zone périphérique extérieure dans le sens de l'axe, dont le diamètre correspond au diamètre extérieur de la bague à ressort de serrage (15) dans l'état détendu.

3. Attache de câble selon la revendication 1 ou 2, **caractérisée en ce qu'**une bague de pression (13) et la deuxième bague de pression (14) présentent respectivement une rainure périphérique (34) et des bras d'arrêt (37) répartis à la périphérie sur le côté tourné vers la première bague de pression (13) et au moins légèrement élastiques, qui saisissent par l'amère, avec les ergots d'arrêt (38) dépassant dans le sens radial vers l'intérieur, la première paroi (35), tournée vers eux, de la rainure périphérique (34) de la deuxième bague de pression (14).

4. Attache de câble selon la revendication 3, **caractérisée en ce que** les ergots d'arrêt (38) sont conçus avec un rétrécissement en forme de cône en direction de l'axe (A) de l'attache de câble (10).

5. Attache de câble selon la revendication 3 ou 4, **caractérisée en ce que** la hauteur de la première paroi (35) de la rainure périphérique (34) est inférieure de l'épaisseur des bras d'arrêt (37) à celle de la deuxième paroi (36) de la rainure périphérique (34).

6. Attache de câble selon l'une quelconque des revendications 1 à 5, **caractérisée en ce qu'**au moins une des deux bagues de pression (13) est à base de matériau conductible.

7. Attache de câble selon l'une quelconque des revendications 1 à 6 avec une bague d'étanchéité (17) disposée entre le fourreau (18) et la face frontale (16) côté câble de la bague de pression (14) extérieure, **caractérisée en ce que** la bague d'étanchéité (17) est reliée à la bague de pression (14) tournée vers elle.

8. Attache de câble selon la revendication 7, **caractérisée en ce que** la bague d'étanchéité (17) est collée sur la face frontale (16) extérieure de la bague de pression (14) tournée vers elle.

9. Attache de câble selon la revendication 7, **caractérisée en ce que** la bague d'étanchéité (17) est injectée sur la face frontale (16) extérieure de la bague de pression (14) tournée vers elle.

10. Attache de câble selon la revendication 7, **caractérisée en ce que** la bague d'étanchéité (17) est d'un seul tenant avec la bague de pression (14) tournée vers elle.

11. Attache de câble selon l'une quelconque des revendications 7 à 9, **caractérisée en ce que** la bague d'étanchéité (17) présente dans la zone d'extrémité côté entrée de câble un évidement (24) disposé à la périphérie, dans lequel s'engage une zone d'extrémité (25) en forme de collerette du fourreau (18).

12. Attache de câble selon l'une quelconque des revendications 1 à 10, **caractérisée en ce que** le fourreau (18) est un fourreau à vis, qui peut être vissé avec un filetage intérieur sur un filetage extérieur (19) adapté de la partie de passe-câble (12) en forme de tube.

13. Attache de câble selon l'une quelconque des revendications 1 à 11, **caractérisée en ce que** la partie de passe-câble (12) est conçue comme une tubulure (20) en forme de tuyau d'un boîtier dans laquelle le câble (11) peut être raccordé à des parties de commande électriques.

14. Attache de câble selon la revendication 12, **caractérisée en ce que** la tubulure (20) avec le boîtier présente un enrobage par injection en matière plastique (21).
